# EUROPÄISCHE PATENTANMELDUNG

(11) **EP 2 186 702 A2**
(43) Veröffentlichungstag der Anmeldung: **19.05.2010**
(21) Anmeldenummer: 09172974.9
(22) Anmeldetag: 14.10.2009
(51) Int. Cl.: B60W 10/06, B60W 10/08, B60W 10/04, B60W 20/00, B60W 30/20, B60W 30/18, B60K 6/485

(54) **Antriebssystem eines Nutzfahrzeuges und Verfahren zur Steuerung eines Antriebssystems eines Nutzfahrzeuges**

(30) Priorität: 12.11.2008 DE 102008043677
(71) Anmelder: ZF Friedrichshafen AG, 88038 Friedrichshafen (DE)
(72) Erfinder: Bailly, Gerhard, 88046, Friedrichshafen (DE)

(57) **Zusammenfassung**

Die Erfindung betrifft ein Antriebssystem eines Nutzfahrzeuges, insbesondere einer landwirtschaftlichen Zugmaschine, mit einem Antriebsstrang (1), der einen Verbrennungsmotor (2) und ein automatisches Getriebe (3) aufweist. Um bei dem Antriebssystem einen niedrigen Kraftstoffverbrauch und geringe Schadstoffemissionen zu ermöglichen und dennoch einen hohen Fahrkomfort zu gewährleisten, weist der Antriebsstrang (1) eine Hybrideinheit (5) mit wenigstens einem als Generator und Motor betreibbaren Hybridantriebselement (6) und wenigstens einem Energiespeicher (7) auf. Außerdem ist eine Steuerungseinrichtung (8) vorhanden, mittels welcher der Verbrennungsmotor (2) im Zusammenwirken mit der Hybrideinheit (5), weitgehend unabhängig von abrupt schwankenden Leistungsabforderungen am Antriebsstrang (1), in vorab bestimmten Sollbetriebspunkten betreibbar ist.

Bei einem Verfahren zur Steuerung eines Antriebssystems eines Nutzfahrzeuges, insbesondere einer landwirtschaftlichen Zugmaschine, werden eine Hybrideinheit (5) und ein Verbrennungsmotor (2) in Zusammenwirkung so angesteuert, dass über die Hybrideinheit (5) abrupt schwankende Leistungsabforderungen am Antriebsstrang (1) kompensiert werden, wobei der Verbrennungsmotor (2) zumindest annähernd konstant in einem jeweils vorab bestimmten Sollbetriebspunkt betrieben wird.

## Beschreibung

Die Erfindung betrifft ein Antriebssystem eines Nutzfahrzeuges und ein Verfahren zur Steuerung eines Antriebssystems eines Nutzfahrzeuges gemäß dem Oberbegriff des Patentanspruchs 1 beziehungsweise dem Oberbegriff des Patentanspruchs 7.

Nutzfahrzeuge können, je nach Einsatzgebiet, mehr oder weniger häufigen und stark variierenden Leistungsabforderungen am Antriebsstrang ausgesetzt sein. Ist ein in dieser Weise beanspruchtes Nutzfahrzeug mit einem herkömmlichen Antriebsstrang, d.h. mit einem Verbrennungsmotor als Antriebsaggregat ausgestattet, stehen derartige Schwankungen in der Leistungsabforderung im Widerspruch zu den zunehmend strengeren Anforderungen hinsichtlich der Verbrauchs- und Abgasoptimierung des Verbrennungsmotors.

Vorteilhaft ist ein konstanter Betrieb des Verbrennungsmotors in einem verbrauchs- und abgastechnisch optimalen Betriebspunkt innerhalb eines vorgegebenen Motorkennfeldes. Änderungen in der Leistungsabforderung des Motors werden üblicherweise von einem Regelsystem durch eine entsprechende Änderung der Kraftstoff-Einspritzmenge und gegebenenfalls auch durch eine Änderung der Lage des Betriebspunktes im Kennfeld beantwortet, was unter Umständen zu instationären Betriebszuständen des Motors mit einem negativen Einfluss auf den Treibstoffverbrauch und das Abgasverhalten führen kann. Wird der Motor in einem Betriebspunkt betrieben, der keine weiteren Leistungsreserven bietet, also entlang oder nahe einer Volllastkurve, so muss eine Lastspitze zwangsläufig zu einem Drehzahleinbruch fuhren.

Besonders der Einsatz landwirtschaftlicher Zugmaschinen ist dadurch charakterisiert, dass zu einem großen Anteil derer Betriebsdauer eine stark schwankende Motorleistung nahe oder bei Volllast des Verbrennungsmotors abgerufen wird. Als ein Beispiel kann hier der Einsatz eines Pfluges oder Grubbers bei der Bearbeitung von großen Landflächen genannt werden. Die von der Zugmaschine abgeforderte Leistung wird dabei einerseits durch die zur Bearbeitung des Bodens gewünschte Fahrgeschwindigkeit, welche im Wesentlichen von der verfügbaren Fahrzeugleistung, den Eigenschaften des Arbeitsgerätes und von den Parametern des Arbeitsprozesses abhängt, und andererseits von den Eigenschaften des zu bearbeitenden Bodens selbst bestimmt. Da die lokalen Eigenschaften des Bodens stark schwanken können, beispielsweise durch vorangegangene bodenverdichtende Arbeitsschritte, differierende Feuchtigkeits- und Bodenqualitätszonen, Felder an Steigungen bzw. Gefälle etc., führt dies dazu, dass die Leistungsabforderung an den Antriebsstrang ebenfalls stark schwanken kann.

Die Problematik der starken Schwankungen der Leistungsanforderung an den Verbrennungsmotor hat in der Vergangenheit, insbesondere in Verbindung mit stufenlosen Getrieben, bereits dazu geführt, dass Grenzlastregler entwickelt wurden, die bei abfallender Motordrehzahl automatisch die Fahrgeschwindigkeit des Fahrzeuges durch Verstellen der Getriebeübersetzung reduzieren und bei Entlastung wieder anheben. Mit solchen Systemen wird, wie Praxistests, beispielsweise beim Arbeitseinsatz einer Landmaschine beim Grubbern, gezeigt haben, die Leistungsabforderung an den Motor zwar teilweise harmonisiert und die Drehzahlschwankungen können reduziert werden. Nachteilig sind allerdings die damit verbundenen Änderungen der Fahrzeuggeschwindigkeit bei Lastspitzen, die sowohl den Fahrkomfort als auch das Arbeitsergebnis mit dem jeweils verwendeten Arbeitsgerät beeinträchtigen können. Zudem können sehr kurzfristige Drehzahlschwankungen aufgrund der begrenzten Verstelldynamik solcher Regelsysteme kaum kompensiert werden, was sich wiederum ungünstig auf den Kraftstoffverbrauch und die Emissionswerte auswirkt.

Neben den herkömmlichen Antriebssträngen, bei denen der Antrieb ausschließlich über eine Antriebsart, in der Regel über einen Verbrennungsmotor, erfolgt, sind bereits auch Hybridantriebe für Nutzfahrzeuge bekannt. Die US 6 170 587 B1 und die darin erwähnten weiteren Druckschriften geben einen allgemeinen Überblick über verschiedene derartige Hybridsysteme. Darin werden Antriebskonzepte mit einem Antriebsaggregat, meist ein Verbrennungsmotor, in Kombination mit ein oder mehreren mechanischen, hydraulischen und/oder elektrischen Antriebsmaschinen und Energiespeichern dargelegt. Auf die Problematik der schnell schwankenden Leistungsabforderungen am Antriebsstrang von Zugmaschinen im landwirtschaftlichen Einsatz wird darin allerdings nicht eingegangen.

Weiterhin ist aus der EP 0 830 968 A1 ein Verfahren zur Durchführung von Betriebszustandsänderungen eines Verbrennungsmotors eines Hybridfahrzeuges bekannt. Bei einer Konfiguration als Parallelhybrid ist eine elektrische Maschine als Motor und Generator, bei einer Konfiguration als Serienhybrid sind eine erste elektrische Maschine als Generator und eine zweite elektrische Maschine als Motor angeordnet. Weiterhin ist ein elektrischer Energiespeicher, vorzugsweise eine Batterie, vorgesehen. Bei einem Übergang des Verbrennungsmotors von einem ersten Betriebszustand in einen zweiten Betriebszustand wird eine mit dem Antriebsstrang gekoppelte Hybrideinheit so eingesetzt, dass der Verbrennungsmotorbetrieb bestimmten vorgegebenen Betriebsparametern genügt. Insbesondere wird bei einer anstehenden Drehzahländerung der Energiespeicher je nach Ausgangslage gezielt geladen, weniger geladen, entladen oder weniger entladen, d.h. die Hybrideinheit nimmt Leistung auf oder gibt Leistung an den Antriebsstrang ab, so dass die gewünschte Drehzahländerung möglichst schnell erfolgt.

Der Verbrennungsmotor wird bei dieser Drehzahländerung, unabhängig von der auf die Antriebsräder zu übertragenden Leistung, hinsichtlich mindestens eines Betriebsparameters, beispielsweise eines minimalen Kraftstoffverbrauchs, entlang günstiger Betriebspunkte in einem Kennfeld geführt. Mit einem entsprechenden Steuerungs- und Datenverarbeitungsaufwand für die Auswahl geeigneter Betriebspunkte können auch mehrere Betriebsparameter berücksichtigt werden. Das bekannte Verfahren zeigt zwar Möglichkeiten auf, den Betrieb des Verbrennungsmotors mit Hilfe von Hybridelementen bei angekündigten, definierten Betriebszustandsänderungen gezielt zu steuern. Dabei werden jedoch unvorhergesehene kurzfristige Betriebszustandsänderungen des Verbrennungsmotors, wie sie im landwirtschaftlichen Einsatz regelmäßig vorkommen, nicht berücksichtigt.

Vor diesem Hintergrund liegt der Erfindung die Aufgabe zugrunde, ein Antriebssystem eines Nutzfahrzeuges mit einem Verbrennungsmotor und ein Verfahren zur Steuerung eines solchen Antriebssystems zu finden, die einen niedrigen Kraftstoffverbrauch und geringe Schadstoffemissionen, insbesondere bei einem Einsatz in einem für das Nutzfahrzeug typischen Anwendungsbereich, ermöglichen und dennoch einen hohen Fahrkomfort gewährleisten.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass durch eine Ergänzung eines Antriebsstrangsystems einer landwirtschaftlichen Zugmaschine um ein Hybridsystem, welches in der Lage ist, bei einem kurzfristigen Leistungsüberangebot seitens des Verbrennungsmotors Energie zu speichern und ebenso kurzfristig bei einer abtriebsseitigen Überlastung des Motors Leistung aus dem Speicher an den Antriebsstrang abzugeben, ein dynamisch reagierender Leistungsspeicher zur Verfügung gestellt werden kann, der kurzfristige Schwankungen in der Leistungsabforderung des Antriebsstranges ausgleicht und somit eine weitgehend konstante Leistungsanforderung und einen vorteilhaften konstanten Betrieb des Verbrennungsmotors bei wechselnden Lasten ermöglicht.

Demnach geht die Erfindung aus von einem Antriebssystem eines Nutzfahrzeuges, insbesondere einer landwirtschaftlichen Zugmaschine, mit einem Antriebsstrang, der einen Verbrennungsmotor und ein automatisches Getriebe aufweist. Zur Lösung der gestellten Aufgabe sieht die Erfindung vor, dass der Antriebsstrang eine Hybrideinheit mit wenigstens einem als Generator und Motor betreibbaren Hybridantriebselement und wenigstens einem Energiespeicher aufweist, und dass eine Steuerungseinrichtung vorgesehen ist, über die der Verbrennungsmotor im Zusammenwirken mit der Hybrideinheit, weitgehend unabhängig von abrupt schwankenden Leistungsabforderungen am Antriebsstrang, in vorab bestimmten Sollbetriebspunkten betreibbar ist.

Weiterhin geht die Erfindung aus von einem Verfahren zur Steuerung eines Antriebssystems eines Nutzfahrzeuges, insbesondere einer landwirtschaftlichen Zugmaschine. Die gestellte Aufgabe bezüglich des Verfahrens wird dadurch gelöst, dass eine einem Antriebsstrang zugeordnete Hybrideinheit und ein Verbrennungsmotor in Zusammenwirkung so angesteuert werden, dass über die Hybrideinheit abrupt schwankende Leistungsabforderungen am Antriebsstrang kompensiert werden, wobei der Verbrennungsmotor zumindest annähernd konstant in einem jeweils vorab bestimmten Sollbetriebspunkt betrieben wird.

Durch die Erfindung wird ein vorteilhafter Fahr- und Arbeitsbetrieb einer Zugmaschine im landwirtschaftlichen Einsatz erreicht, bei dem durch ein Hybridsystem Leistungsanforderungsspitzen abgedeckt und Leistungsanforderungseinbrüche geglättet werden, so dass der Verbrennungsmotor verbrauchs- und emissionsgünstig weitgehend bei gleichmäßiger Drehzahl und Auslastung betrieben werden kann. Dadurch ergibt sich ein komfortabler Fahrzeugbetrieb bei gleichförmigem Motorgeräusch und gleichförmiger Fahrgeschwindigkeit trotz Schwankungen in der Arbeitslast. Insbesondere wird ein konstanter Betrieb des Verbrennungsmotors in Volllast-Betriebspunkten ohne Drehzahlabfall bei Lastspitzen ermöglicht. Die konstante Fahrzeugbewegung bzw. konstante Antriebsdrehzahl an einem eingesetzten Arbeitsgerät wirkt sich auch durch ein verbessertes Arbeitsergebnis aus. Schließlich verringern sich auch die Anforderungen an die Schalt- und Verstellgeschwindigkeit eines automatischen lastschaltbaren bzw. stufenlosen Fahrzeuggetriebes im Antriebsstrang, was sich zusätzlich kostengünstig und verschleißmindernd auswirkt.

Insbesondere bei einem landwirtschaftlichen Einsatz eines derart ausgerüsteten Fahrzeuges können folgende Verfahrensschritte vorgesehen sein:
- Bestimmung eines einer Sollleistungsabforderung zugeordneten gemittelten Sollbetriebspunktes des Verbrennungsmotors, wobei der jeweilige Sollbetriebspunkt des Verbrennungsmotors aus erfassten, unmittelbar zurückliegenden Motordaten und/oder mit Hilfe von Vorgaben des Fahrers berechnet wird,
- Betreiben des Verbrennungsmotors in dem bestimmten Sollbetriebspunkt,
- Aktivieren der Hybrideinheit als Generator und Laden des Energiespeichers bei Unterschreiten der Sollleistungsabforderung,
- Aktivieren der Hybrideinheit als Motor und Entladen des Energiespeichers bei Überschreiten der Sollleistungsabforderung.

Demnach reagiert das erfindungsgemäße Antriebssystem in einer landwirtschaftlichen Zugmaschine bei der Bearbeitung des Bodens mit einem Arbeitsgerät auf schwankende Leistungsabforderungen am Antriebsstrang aufgrund variierender Bodenverhältnisse mit einer entsprechenden Kompensation. Tritt ein kurzfristiges Leistungsüberangebot seitens des Verbrennungsmotors, d.h. eine Unterschreitung der Sollleistungsabforderung auf, was einen Drehzahlanstieg bei abfallender Last und reduzierter Einspritzmenge zur Folge hätte, speichert der Energiespeicher die überschüssige Energie. Tendiert hingegen die Einspritzmenge bei abfallender Drehzahl aufgrund eines Lastanstieges, d.h. einer Überschreitung der Sollleistungsabforderung, dazu anzusteigen, wird stattdessen Energie aus dem Speicher entnommen und dem Antriebsstrang zugeführt. Drehzahländerungen am Verbrennungsmotor durch schwankende Leistungsabforderungen am Antriebsstrang werden somit vermieden.

Dies wird durch ein geeignetes Steuerungssystem geregelt, welches aus der unmittelbaren Historie des Motorbetriebs und/oder aus Eingabedaten des Fahrers in das Steuerungssystem des Fahrzeugs einen günstigen Betriebspunkt des Verbrennungsmotorbetriebs bestimmt und durch jeweiliges Ansteuern der Komponenten des Hybridsystems den Verbrennungsmotor unter Last weitgehend konstant in diesem Betriebspunkt hält. Folglich läuft der Verbrennungsmotor während des Arbeitseinsatzes der Zugmaschine mit dem Arbeitsgerät zumindest überwiegend verbrauchs- und abgasoptimiert. Die Leistungsabgabe bzw. Leistungsaufnahme am Antriebsstrang durch die Hybrideinheit sorgt dabei gleichzeitig für eine gleichbleibende Fahrgeschwindigkeit und damit für einen hohen Fahrkomfort.

Zur Realisierung der erfindungsgemäßen Hybrideinheit können alle Komponenten verwendet werden, die eine schnelle Energiespeicherung und Leistungsbereitstellung sowie Systemregelung erlauben. Besonders vorteilhaft sind elektrische Systemkomponenten geeignet. Als Hybridantriebselement kann eine elektrische Maschine, welche als Stromgenerator und Elektromotor ansteuerbar ist, vorgesehen sein. Als Energiespeicher können insbesondere Hochleistungskondensatoren, die am Markt bereits erhältlich sind und für Anwendungen in Fahrzeugen ständig weiterentwickelt werden, zum Einsatz kommen. Es ist auch möglich, für die Hybrideinheit mehrere Antriebsaggregate und mehrere Energiespeicher zu verwenden.

Grundsätzlich können zur Aktivierung des Generatorbetriebs und damit zur Energiespeicherung, abgesehen von der erläuterten Kompensation abrupt schwankender Leistungsabforderungen am Antriebsstrang, alle Fahrzeugbetriebsbedingungen genutzt werden, die eine sinnvolle Leistungsrückgewinnung aus dem Antriebsstrang erlauben. Beispielsweise sei ein Schub- und Brems- bzw. Retarderbetrieb genannt. Umgekehrt ist es auch möglich, die gespeicherte Energie als Leistungsreserve, beispielsweise bei Beschleunigungsvorgängen (Boostbetrieb) oder im Rangierbetrieb zu nutzen.

Zur Verdeutlichung der Erfindung ist der Beschreibung eine Zeichnung eines Ausführungsbeispiels beigefügt. In dieser zeigt
- Fig. 1: ein Schema eines Antriebsstranges einer landwirtschaftlichen Zugmaschine mit einer Hybrideinheit, und
- Fig. 2: ein Ablaufplan zur Steuerung eines Antriebsstranges einer Zug- maschine mit einer Hybrideinheit im landwirtschaftlichen Einsatz.

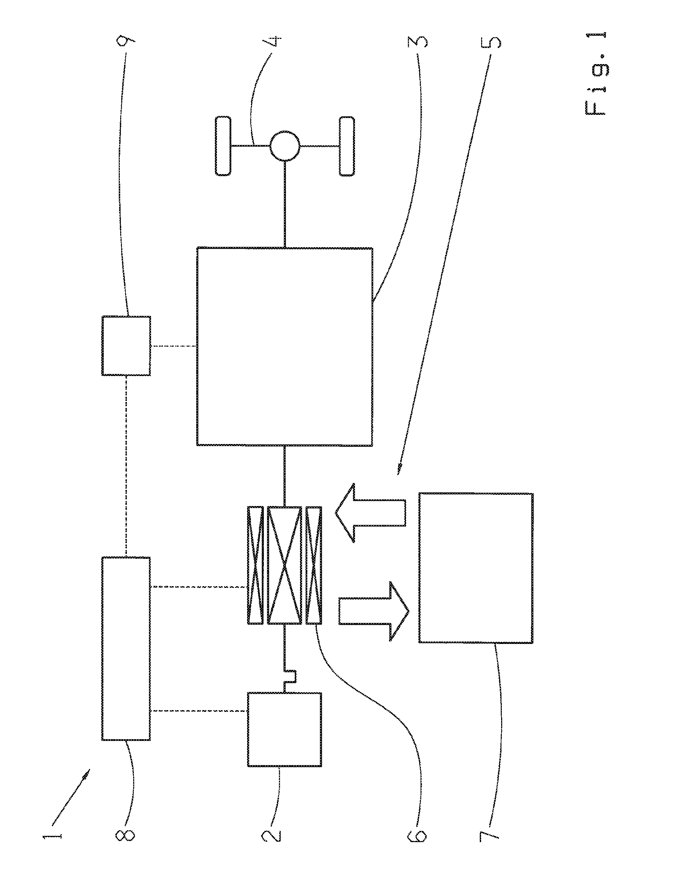

Demnach weist ein Antriebsstrang 1 einer Zugmaschine einen Verbrennungsmotor 2 und ein automatisches lastschaltbares Stufengetriebe oder Stufenlosgetriebe 3 auf. Die angetriebenen Achsen, beispielsweise eine in der Fig. 1 angedeutete Hinterachse 4 mit einem Differenzialgetriebe, sind auf bekannte Weise mit einem über das Getriebe 3 übersetzten Antriebsmoment beaufschlagbar. Zur Erzeugung eines jeweils abgeforderten Antriebsmomentes ist primär der Verbrennungsmotor 2 vorgesehen. Weiterhin ist im Kraftfluss zwischen dem Verbrennungsmotor 2 und dem Getriebe 3 eine bedarfsweise als Generator bzw. Energiespeicher oder Energiequelle bzw. Motor ansteuerbare Hybrideinheit 5 zuschaltbar angeordnet.

Die Hybrideinheit 5 weist eine Elektromaschine 6 als Hybridantriebselement und einen vorzugsweise als eine Anordnung von Hochleistungskondensatoren ausgebildeten Energiespeicher 7 auf. Die Elektromaschine 6 ist je nach Betriebssituation als Generator oder Motor ansteuerbar, der Energiespeicher 7 ist entsprechend über den Generator 6 aufladbar, oder der Elektromotor 6 ist über den Energiespeicher 7 mit elektrischer Energie versorgbar.

Weiterhin ist eine Steuerungseinrichtung 8 vorhanden, mittels der die relevante Antriebsdaten erfasst, Betriebspunkte des Verbrennungsmotors berechnet und vorgegeben sowie der Verbrennungsmotor 2 und die Hybrideinheit 5 entsprechend angesteuert werden können. Die Steuerungseinrichtung 8 kommuniziert zudem vorteilhaft mit einer Getriebesteuerung 9, über die eine jeweils gewünschte bzw. berechnete Antriebsübersetzung schaltbar ist.

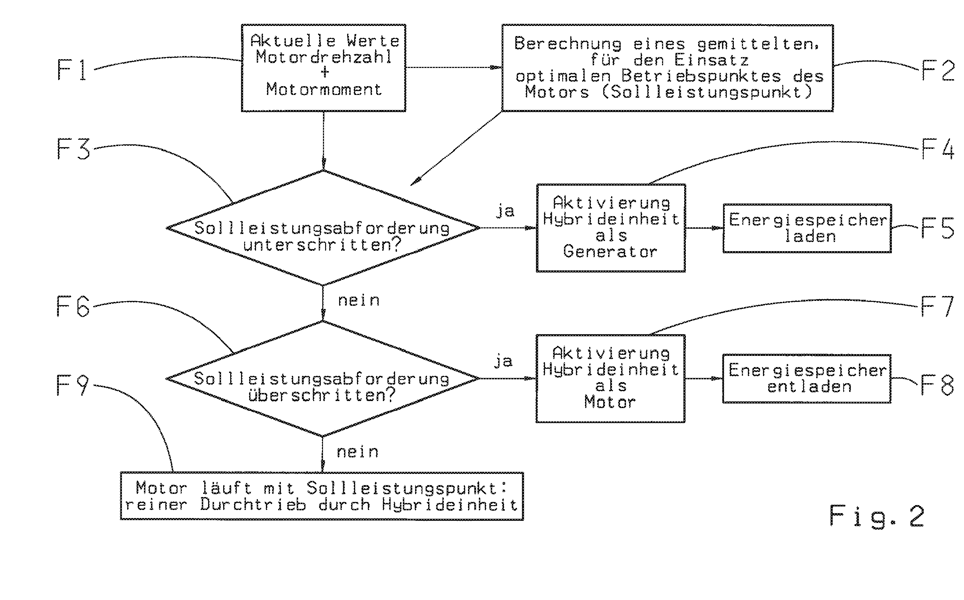

Ein Verfahren zur Steuerung des Antriebstranges 1 der Zugmaschine im landwirtschaftlichen Einsatz mit einem Arbeitsgerät zur Bodenbearbeitung wird anhand des in Fig. 2 dargestellten Ablaufplans mit den Funktionsblöcken F1 bis F9 erläutert.

Zunächst werden im Block F1 aktuelle Antriebsdaten, insbesondere die Motordrehzahl und das Drehmoment des Verbrennungsmotors 2 gesammelt. Daraus wird im Block F2 ein gemittelter, für den Einsatz optimaler Betriebspunkt des Verbrennungsmotors 2 ermittelt. Diesem Sollbetriebspunkt, im Folgenden Solllelstungspunkt genannt, entspricht eine bestimmte Sollleistungsabforderung am Antriebsstrang 1.

Im folgenden Block F3 wird zunächst eine Unterschreitung der Sollleistungsabforderung geprüft. Ist dies der Fall, beispielsweise bei lokal aufgelockertem Boden, wird die Hybrideinheit 5 im Block F4 als Generator aktiviert, wodurch der Energiespeicher 7 gemäß Block F5 elektrisch aufgeladen wird. Durch den Generatorbetrieb wird die Last am Antriebsstrang 1 angehoben, so dass der Verbrennungsmotor 2 weiterhin im Sollleistungspunkt mit weitgehend konstanter Drehzahl betrieben wird.

Wird hingegen keine Unterschreitung der Sollleistungsabforderung festgestellt, überprüft die Steuerungseinrichtung 8 im nächsten Schritt F6, ob eine Überschreitung der Sollleistungsabforderung vorliegt. Ist dies der Fall, beispielsweise bei lokal verfestigtem Boden, so wird die Hybrideinheit 5 gemäß Block F7 als Elektromotor aktiviert, wodurch der Energiespeicher 7 gemäß Block F8 elektrisch entladen wird.

Durch den Elektromotorbetrieb wird der Verbrennungsmotor 2 unterstützt und somit die Lastspitze am Antriebsstrang 1 durch ein zusätzliches Antriebsmoment abgedeckt. Selbst bei Volllast läuft der Verbrennungsmotor 2 weiterhin ohne Drehzahlabfall in dem vorgegebenen Sollleistungspunkt. Die Fahrzeuggeschwindigkeit bleibt während der Regelung bei unveränderter Stellung des Fahrpedals konstant.

Wird im abschließenden Funktionsblock F9 keine Abweichung von der Solllelstungsabforderung festgestellt, läuft der Verbrennungsmotor 2 ohne Eingreifen der Hybrideinheit 5 in dem aktuell gültigen Sollleistungspunkt. Ändern sich die Eingangsparameter, beispielsweise bei einer veränderten Einstellung am Arbeitsgerät oder einer anderen gewünschten Fahrgeschwindigkeit, erfolgt eine erneute Regelung auf einen dann ermittelten, neuen gültigen optimalen Betriebspunkt des Verbrennungsmotors 2.

### Bezugszeichenliste

- 1: Antriebsstrang
- 2: Verbrennungsmotor
- 3: Getriebe
- 4: Antriebsachse
- 5: Hybrideinheit
- 6: Hybridantriebselement, Elektromaschine
- 7: Energiespeicher, Kondensator
- 8: Steuerungseinrichtung
- 9: Getriebesteuerung
- F1 - F9: Funktionsblöcke

## Patentansprüche

1. Antriebssystem eines Nutzfahrzeuges, insbesondere einer landwirtschaftlichen Zugmaschine, mit einem Antriebsstrang (1), der einen Verbrennungsmotor (2) und ein automatisches Getriebe (3) aufweist, **dadurch gekennzeichnet, dass** der Antriebsstrang (1) eine Hybrideinheit (5) mit wenigstens einem als Generator und Motor betreibbaren Hybridantriebselement (6) und wenigstens einem Energiespeicher (7) aufweist, und dass eine Steuerungseinrichtung (8) vorgesehen ist, über die der Verbrennungsmotor (2) im Zusammenwirken mit der Hybrideinheit (5), weitgehend unabhängig von abrupt schwankenden Leistungsabforderungen am Antriebsstrang (1), in vorab bestimmten Sollbetriebspunkten betreibbar ist.

2. Antriebssystem nach Anspruch 1, **dadurch gekennzeichnest, dass** der Energiespeicher (7) als ein elektrischer Speicher ausgebildet ist.

3. Antriebssystem nach Anspruch 1 oder 2, **dadurch gekennzeichnet, dass** der Energiespeicher (7) als mindestens ein Kondensator ausgebildet ist.

4. Antriebssystem nach einem der Ansprüche 1 bis 3, **dadurch gekennzeichnet, dass** das Hybridantriebselement (6) als eine elektrische Maschine ausgebildet ist.

5. Antriebssystem nach einem der Ansprüche 1 bis 4, **dadurch gekennzeichnet, dass** die Hybrideinheit (5) als ein Leistungsrückgewinnungsmittel betreibbar ist.

6. Antriebssystem nach einem der Ansprüche 1 bis 5, **dadurch gekennzeichnet, dass** die Hybrideinheit (5) als eine zusätzlich abrufbare Leistungsreserve betreibbar ist.

7. Verfahren zur Steuerung eines Antriebssystems eines Nutzfahrzeuges, insbesondere einer landwirtschaftlichen Zugmaschine, **dadurch gekennzeichnet, dass** eine einem Antriebsstrang (1) zugeordnete Hybrideinheit (5) und ein Verbrennungsmotor (2) in Zusammenwirkung so angesteuert werden, dass über die Hybrideinheit (5) abrupt schwankende Leistungsabforderungen am Antriebsstrang (1) kompensiert werden, wobei der Verbrennungsmotor (2) zumindest annähernd konstant in einem jeweils vorab bestimmten Sollbetriebspunkt betrieben wird.

8. Verfahren nach Anspruch 7, **dadurch gekennzeichnet, dass** folgende Schritte durchgeführt werden:
a) Bestimmung eines einer Sollleistungsabforderung zugeordneten gemittelten Sollbetriebspunktes des Verbrennungsmotors (2),
b) Betreiben des Verbrennungsmotors (2) in dem bestimmten Sollbetriebspunkt,
c) Aktivieren der Hybrideinheit (5) als Generator und Laden des Energiespeichers (7) bei Unterschreiten der Sollleistungsabforderung,
d) Aktivieren der Hybrideinheit (5) als Motor und Entladen des Energiespeichers (7) bei Überschreiten der Sollleistungsabforderung.

9. Verfahren nach Anspruch 7 oder 8, **dadurch gekennzeichnet, dass** der jeweilige Sollbetriebspunkt des Verbrennungsmotors (2) aus erfassten, unmittelbar zurückliegenden Motordaten berechnet wird.

10. Verfahren nach einem der Ansprüche 7 bis 9, **dadurch gekennzeichnet, dass** der jeweilige Sollbetriebspunkt des Verbrennungsmotors (2) mit Hilfe von Vorgaben eines Fahrers ermittelt wird.

11. Verfahren nach einem der Ansprüche 7 bis 10, **dadurch gekennzeichnet, dass** der Verbrennungsmotors (2) im jeweiligen Sollbetriebspunkt mit konstanter Drehzahl betrieben wird.
